# EUROPÄISCHE PATENTSCHRIFT

(11) **EP 2 299 140 B1**
(45) Veröffentlichungstag und Bekanntmachung des Hinweises auf die Patenterteilung: **20.03.2013**
(21) Anmeldenummer: 09170396.7
(22) Anmeldetag: 16.09.2009
(51) Int. Cl.: F16D 25/0638

(54) **Lamellenkupplung mit elastischem Element**
Lamella coupling with elastic element
Embrayage à lamelles doté d'un élément élastique

(43) Veröffentlichungstag der Anmeldung: 23.03.2011
(73) Patentinhaber: ZF Friedrichshafen AG, 88038 Friedrichshafen (DE)
(72) Erfinder: Großpietsch, Wolfgang, 97422 Schweinfurt (DE); Ebert, Angelika, 97453 Schonungen (DE); Pittner, Daniel, 97218 Gerbrunn (DE)

(56) Entgegenhaltungen:
- EP-A1- 1 577 575
- EP-A1- 1 798 435
- DE-A1- 19 530 443
- DE-A1-102007 056 745
- DE-A1-102008 008 918
- GB-A- 2 149 863
- JP-A- 59 155 627
- JP-A- 2002 213 581
- JP-A- 2003 247 564
- US-A- 5 335 763

## Beschreibung

Die Erfindung betrifft eine Lamellenkupplung im Antriebsstrang eines Kraftfahrzeuges. Solche Lamellenkupplungen sind allgemein bekannt. Üblicher weise bestehen die Lamellenkupplungen aus einem Außenlamellenträger mit einem Verzahnungsprofil an weichem Außenlamellen drehfest und axial verschiebbar angeordnet sind und einem Innenlamellenträger mit einem Verzahnungsprofil an weichem Innlamellen drehfest und axial verschiebbar angeordnet sind. Die Außen- und Innenlamellen sind wechselseitig angeordnet und bilden ein Lamellenpaket. Zur Drehmomentübertragung wird das Lamellenpaket von einem Aktuator zusammengedrückt, wodurch die Lamellen in Reibeingriff gebracht werden. Die Lamellen können als Stahllamellen und als belagtragende Lamellen ausgebildet sein, wobei beim Betätigen immer eine Seite einer Lamelle welche einen Belag aufweist mit einer benachbarten Lamelle, welche keinen Belag aufweist, in Reibeingriff gebracht wird.

Der Aktuator kann beispielsweise als hydraulisch betätigter Kolben ausgeführt sein. Wird eine solche Lamellenkupplung als Anfahrkupplung verwendet, ist besonders bei beginnender Drehmomentübertragung im niedrigen Drehmomentbereich das Drehmomentübertragungsverhalten der Kupplung besonders empfindlich gegenüber Drehmomentschwankungen, welche sich hier überproportional stark auswirken, wenn die Drehzahl der schlupfenden Kupplung mit ihren Anregungen die Eigenfrequenz des Antriebsstranges trifft. So können Schwankungen in der Dicke einzelner Lamellen Drehmomentschwankungen im übertragenen Drehmoment der Kupplung bewirken, welche sich auf den gesamten nachfolgenden Antriebsstrang übertragen und zu einem Ruckeln des Fahrzeugs oder einem Zittern beim Anfahren führen können.

Aus der DE 102 55 537 ist es bekannt, innerhalb des Lamellenpaketes elastische federnde Scheiben anzuordnen. Weiterhin ist aus der DE 195 30 443 bekannt zwischen dem Kolben und dem Lamellenpaket eine Tellerfeder anzuordnen.

Aus der EP 1 577 575 ist zudem bekannt, eine Endlamelle eines Lamellenpaketes dergestalt auszubilden, dass bei hohen Anpresskräften eine möglichst gleichmäßige Pressungsverteilung erzielt wird.

Drehmomentschwankungen des übertragenen Drehmoments treten besonders immer dann auf, wenn die beiden Kupplungsseiten mit unterschiedlicher Drehzahl rotieren, wie zum Beispiel beim Anfahren, und der Anpressdruck infolge von Dickenschwankungen einzelner Lamellen schwankt. Das Drehmoment wird immer dann erhöht wenn eine Erhebung in einer Lamelle eine Erhebung in einer anderen Lamelle, welche mit unterschiedlicher Drehzahl rotiert, passiert, oder wenn der Kolben oder die gegenüberliegende Abstützung des Lamellenpaketes eine Schiefstellung aufweist und die Erhebung in einer Lamelle die durch den Kolben beziehungsweise die gegenüberliegende Abstützstelle definierte Engstelle passiert. Die bekannten federnden Elemente im Lamellenpaket dienen dazu, eine Elastizität in das Lamellenpaket zu bringen, welche Drehmomentungleichförmigkeiten aufgrund von Dickenschwankungen einzelner Lamellen abfedern können.

Nachteilig bei den bekannten Lösungen ist jedoch, dass die federnden Elemente nur in einem Randbereich der benachbarten Lamelle anliegen und somit eine ungleiche Pressungverteilung ins Lamellenpaket eingebracht wird. Diese Ungleichheit ist zwar bei relativ geringen übertragenen Drehmomenten wie beim Anrollen, noch unkritisch, jedoch nicht vernachlässigbar. Um die Pressungsverteilung bei höherem Anpressdruck zu optimieren, sind die federnden Elemente so schwach ausgelegt, das bei einem höheren Anpressdruck das elastische Element plan an der benachbarten Lamelle angedrückt wird. Beim Betätigen des Lamellenpaketes mittels des Aktuators verschiebt sich der Kraftangriffsradius der auf die dem elastischen Element benachbarte Lamelle wirkt, allmählich vom Randbereich hin zur radialen Mitte des Lamellenpaketes.

Aufgabe der Erfindung ist es, eine Lamellenkupplung darzustellen, welche ausgehend vom aufgezeigten Stand der Technik eine verbesserte Krafteinleitung und damit eine verbesserte Pressungsverteilung aufweist.

Diese Aufgabe wird gelöst durch die Merkmale des Anspruchs 1.

Erfindungsgemäß ist das elastische Element so ausgebildet ist, dass beim Betätigen des Lamellenpaketes, das elastische Element an dem, dem ersten Randbereich gegenüberliegenden, zweiten Randbereich des Lamellenpaketes, der benachbarten Lamelle zum Anliegen kommt, und in dem mittlerem Radiusbereich das elastische Element nicht an der benachbarten Lamelle zum Anliegen kommt. Liegt das elastische Element mit seinem ersten Randbereich radial außen an der benachbarten Lamelle an, wird beim Betätigen der zweite Randbereich, der radial innerer Bereich, zur Anlage gebracht ohne das der radial mittlere Bereich zur Anlage kommt. Liegt das elastische Element mit seinem ersten Randbereich radial innen an der benachbarten Lamelle an, wird beim Betätigen der zweite Randbereich, der radial äußere Bereich, zur Anlage gebracht ohne das der radial mittlere Bereich zur Anlage kommt.

Vorteilhaft hierbei ist, dass sich das elastische Element nicht ausgehend vom ersten anliegenden Randbereich beim Betätigen der Lamellenkupplung kontinuierlich über die Mitte bis zum gegenüberliegenden Randbereich hin an die benachbarte Lamelle anlegt, sondern dass beim Betätigen der Lamellenkupplung zuerst der zweite Randbereich an der benachbarten Lamelle zum Anliegen kommt, wobei in dem mittlerem Radiusbereich das elastische Element nicht an der benachbarten Lamelle zum Anliegen kommt. Während es beim Stand der Technik erst bei völligem Anliegen des elastischen Elementes an der benachbarten Lamelle und damit erst am Ende des Federweges des elastischen Elementes zu einer Krafteinleitung an dem zweiten Randbereich kommt, wird bei der Erfindung bereits viel früher und damit noch im federnden Bereich des elastischen Elementes eine Krafteinleitung am zweiten Randbereich realisiert. Hierdurch verschiebt sich der mittlere Kraftangriffsradius auf die dem elastischen Element benachbarte Lamelle nicht kontinuierlich zur radialen Mitte des Lamellenpaketes hin und erreicht erst am Ende des Federweges des elastischen Elementes im Wesentlichen den Kraftangriffsradius des Aktuators. Nach der Erfindung wird der mittlere Kraftangriffsradius bereits beim Anliegen des elastischen Elementes am zweiten Randbereich der benachbarten Lamelle erreicht und bleibt dann im Wesentlichen über den restlichen Federweg konstant.

Eine besonders vorteilhafte Ausgestaltung des elastischen Elementes sieht hierbei vor, dass der Verlauf des Kraftangriffsradius im federnden Bereich des elastischen Elementes einen Sprung aufweist, wohingegen der Verlauf der Kraft im federnden Bereich im Wesentlichen linear verläuft. Vorteilhaft hierbei ist, dass durch den linearen Kraftverlauf eine vorteilhafte Regelung der Lamellenkupplung möglich wird. Weiterhin erfolgt ein weicher Übergang des Kraftverlaufs vom federnden Bereich in den nichtfedernden Bereich, wenn das elastische Element quasi plan anliegt.

Eine vorteilhafte Weiterbildung der Erfindung sieht vor, dass das elastische Element als Außenlamelle ausgebildet ist und mit einem Verzahnungsprofil im Außenlamellenträger getragen wird. Hierdurch wird eine radiale Führung des elastischen Elementes gewährleistet und außerdem kann sich das elastische Element nicht mehr relativ zur benachbarten Lamelle verdrehen. Voraussetzung hierbei ist, dass sowohl das elastische Element als auch die benachbarte Lamelle als Außenlamellen oder als Innenlamellen ausgebildet sind.

Das elastische Element ist vorzugsweise so ausgebildet, dass das elastische Element einen ersten Bereich und einen davon axial abgestuften zweiten Bereich aufweist, wobei der erste Bereich bei unbetätigter Lamellenkupplung an der benachbarten Lamelle anliegt und das Verhältnis von erstem Bereich zu zweitem Bereich zwischen 1/7 und 3/7 liegt. Erfindungsgemäß entspricht der erste Bereich dem ersten anliegenden Randbereich, wohingegen der zweite Randbereich nur einen Teil des zweiten Bereichs bildet. In der bevorzugten Ausgestaltung des elastischen Elementes als Außenlamelle ist der erste und der zweite Bereich so definiert, das der erste und der zweite Bereich zusammengenommen die gesamte Radialerstreckung des elastischen Elementes bilden und somit der Verzahnungsbereich entweder dem ersten oder dem zweiten Bereich zugehörig ist. Da der Verzahnungsbereich im Falle einer Außenlamelle der radial äußere Randbereich ist, wird über diesen bei Anliegen am Verzahnungsbereich der benachbarten Außenlamelle Drehmoment übertragen. Das erfindungsgemäße Verhältnis von erstem zu zweitem Bereich gewährleistet, dass beim Betätigen der Lamellenkupplung das übertragenen Drehmoment beim Anfahren, welches weit geringer ist als das maximal übertragbare Drehmoment, die an der benachbarten Lamelle anliegenden Flächen des ersten und des zweiten Randbereichs des elastischen Elementes im Wesentlichen gleich groß sind.

Eine weitere bevorzugte Weiterbildung der Erfindung sieht vor, dass die axiale Stufe zwischen 10% und 90%, vorzugsweise zwischen 10% und 50%, der Materialstärke des ersten Bereichs entspricht. Vorteilhaft hierbei ist, dass die Stufe in der vorzugsweise aus Stahlblech ausgeführten Außenlamelle eingeprägt werden kann, und dass der erste Bereich nicht mehr als die axiale Materialstärke in diesem Bereich zum zweiten Bereich axial versetzt ist. Weiterhin sind herstellungsbedingte Toleranzen einer Stufe besser beherrschbar als bei einer Tellerfeder. Vorzugsweise liegt der zweite Bereich des elastischen Elementes in einer, um die axiale Stufe versetzten, parallelen Ebene zum ersten Bereich. Es kann jedoch auch vorteilhaft sein, das der zweite Bereich zum ersten Bereich zusätzlich zur Stufe noch einen Winkel aufweist, welcher vorzugsweise zwischen 1° und 10°, höchstvorzugsweise zwischen 1° und 5° beträgt, so daß der zweite Bereich zur benachbarten Lamelle weggeneigt ist und somit der zweite Randbereich weiter als nur die Stufenhöhe der axialen Stufe von der benachbarten Lamelle beabstandet ist. Vorteilhaft bei der Kombination von Stufung und Tellerung des elastischen Elementes ist, dass bei der Herstellung die Elastizität des Elementes sowohl durch die Stufe als auch durch die Tellerung eingestellt und optimiert werden kann.

Vorzugsweise ist die axiale Materialstärke des ersten und des zweiten Bereichs gleich stark, so daß das elastische Element aus einer planen Scheibe gefertigt werden kann. Es kann jedoch aus erfindungsgemäß vorgesehen sein, das die Materialstärke des ersten Bereichs um die axiale Stufe dicker ausgebildet ist als der zurückgesetzte zweite Bereich.

Eine bevorzugte Anordnung des elastischen Elementes im Lamellenpaket sieht vor, dass das elastische Element zwischen dem Aktuator und der ersten benachbarten Außenlamelle angeordnet ist.

Vorteilhaft hierbei ist, dass die axiale Schwingfähigkeit des Lamellenpaketes reduziert wird. Axiale Schwingungen, die vom Aktuator auf das Lamellenpaket übertragen würden, werden vom zwischen dem Aktuator und dem Lamellenpaket angeordneten elastischen Element abgemildert. Hierdurch werden sowohl die Drehmomentschwankungen aufgrund von Dickenschwankungen der Lamellen weggefiltert, als auch Drehmomentschwankungen aufgrund von axialen Schwingungen oder Anpresskraftschwankungen des Aktuators. Die Masse des Lamellenpaketes ist am gegenüberliegenden festen Axialanschlag abgestützt und somit aus dem schwingfähigen System ausgekoppelt.

Liegt hingegen das Lamellenpaket direkt am Aktuator an und ist das elastische Element am gegenüberliegenden Ende des Lamellenpaketes angeordnet, werden zwar die Drehmomentschwankungen aufgrund von Dickenschwankungen der Lamellen weggefiltert, jedoch stellt die Masse des Lamellenpaketes ein schwingfähiges System dar, welches von Axialschwingungen des Aktuators angeregt werden kann.

Eine besonders bevorzugte Ausgestaltung des Aktuators sieht vor, dass der Aktuator mit einer balligen Anlagefläche auf den mittleren Radiusbereich des elastischen Elementes wirkt. Vorteilhaft hierbei ist, dass der Aktuator auf den Bereich des elastischen Elementes wirkt, welcher bei Anliegen des ersten und des zweiten Randbereiches noch nicht an der benachbarten Lamelle anliegt, und somit noch federnd wirkt.

Da bei der Betätigung der Lamellenkupplung das elastische Element erfindungsgemäß eine Kippbewegung um den Anlagepunkt des Aktuators macht, dient die ballige Anlagefläche dazu, dass der Anlagepunkt des elastischen Elementes am Aktuator abrollen kann, ohne über eine Kante zu kippen. Der Aktuator greift vorzugsweise mit einer Stirnfläche an der elastischen Lamelle an, welche in ihrer radialen Erstreckung in etwa der Materialstärke der Lamellen entspricht. Die Stirnfläche des Aktuators kann hierbei abgerundet oder dachförmig ausgebildet sein. Eine alternative oder zusätzliche Ausbildung der Erfindung sieht vor, dass das elastische Element auf der dem Aktuator axial entgegengesetzten Seite des Lamellenpaketes zwischen der letzten Außenlamelle des Lamellenpaketes und einem Axialschlag, welcher das elastische Element axial abstützt, angeordnet ist. Vorzugsweise wirkt der Axialanschlag auf den mittleren Radiusbereich des elastischen Elementes. Hierbei liegt, wie auch bei der aktuatorseitigen Anordnung des elastischen Elementes, der Krafteinleitungsradius beziehungsweise der Kraftabstützungsradius in dem mittleren Radiusbereich, welcher bei Anliegen des ersten und des zweiten Randbereiches noch beabstandet von der benachbarten Lamelle, und somit noch federnd wirkt.

Die Erfindung wird nachfolgend anhand von Figuren dargestellt.

Es zeigt:
Fig. 1 eine erste erfindungsgemäße Lamellenkupplung im nichtbetätigtem Zustand
Fig. 2 die erste erfindungsgemäße Lamellenkupplung im betätigtem Zustand
Fig 3. die erste erfindungsgemäße Lamellenkupplung bei Nennanpresskraft
Fig 4. eine Doppelkupplungsanordnung mit zwei erfindungsgemäßen Lamellenkupplungen
Fig. 5 eine alternative Doppelkupplungsanordnung
Fig. 6 eine zweite erfindungsgemäße Lamellenkupplung im nichtbetätigtem Zustand
Fig. 7 eine zweite erfindungsgemäße Lamellenkupplung im betätigtem Zustand
Fig. 8 oben einen Verlauf des Kraftangriffsradius einer Lamellenkupplung nach dem Stand der Technik

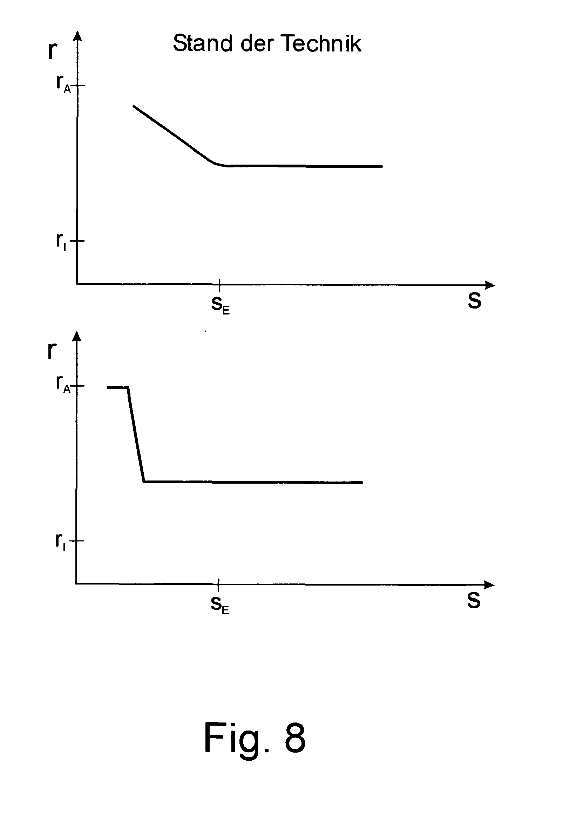

Fig. 8 unten einen Verlauf des Kraftangriffsradius einer erfindungsgemäßen Lamellenkupplung

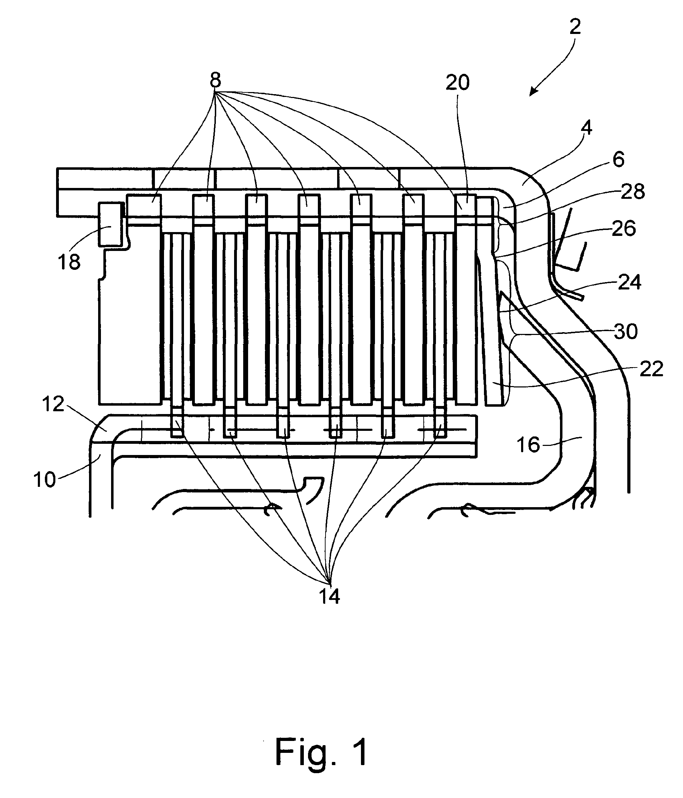

In Fig.1 ist eine Lamellenkupplung 2 dargestellt mit einem Außenlamellenträger 4, welcher an der Innenumfangsfläche ein Verzahnungsprofil 6 aufweist, in welchem die Außenlamellen 8 drehfest aber axial verschiebbar angeordnet sind. Der Innenlamellenträger 10 weißt an der Außenumfangsfläche ein Verzahnungsprofil 12 auf, in welchem die Innenlamellen 14 drehfest aber axial verschiebbar angeordnet sind. Die Innenlamellen 14 sind hier als belagtragende Lamellen ausgebildet und die Außenlamellen 8 als Stahllamellen. Eine Umkehrung von Belag- und Stahllamellen wäre jedoch auch denkbar. Der Aktuator ist als axial verschiebbarer Kolben ausgebildet. Das Lamellenpaket wird durch eine Axialsicherung in Form eines Sprengringes 18, welcher in einer Nut im Außenlamellenträger 4 gehalten ist, axial abgestützt. Die am Sprengring abgestützte Endlamelle ist dicker ausgebildet als die anderen Außenlamellen um eine Durchbiegung zu vermeiden. Zwischen dem Aktuator 16 und der ersten Außenlamelle 20 ist ein elastisches Element 22 angeordnet. Das axial elastische Element 22 ist wie die Außenlamellen im Verzahnungsprofil 6 des Außenlamellenträgers 4 gehalten. Hierzu weist das elastische Element 22 ein korrespondierendes Verzahnungsprofil am Außenumfang auf.

Das elastische Element 22 liegt nur im radial äußeren Randbereich an der benachbarten Außenlamelle 20 an. Der Aktuator liegt mit einer balligen Stirnfläche 24 im mittleren Radiusbereich des elastischen Elements 22 an. Das elastische Element 22 weist eine axiale Stufe 26, welche den anliegenden ersten Randbereich 28 begrenzt. Die Stufe trennt den ersten Bereich, welcher dem ersten Randbereich 28 entspricht, vom zweiten Bereich 30 ab, welcher gegenüber dem ersten Bereich 28 ausgestellt ist.

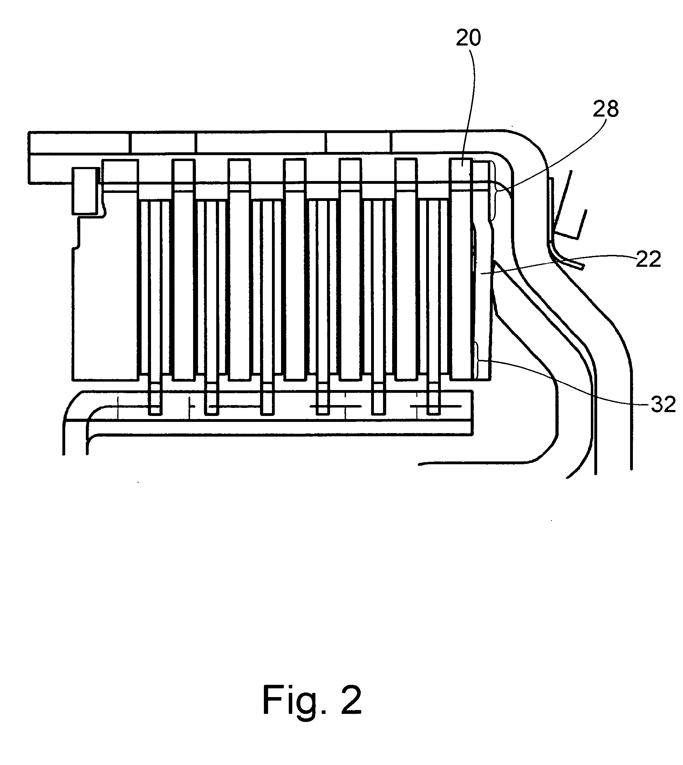

In Fig. 2 ist die Lamellenkupplung der Figur 1 im betätigten Zustand dargestellt. Der Betätigungszustand entspricht hierbei einer Drehmomentübertragungskapazität welche etwa im Bereich von 20 Nm bis 50 Nm liegt und beim Anfahren durchlaufen wird. Das elastische Element 22 ist durch den Aktuator 16 entgegen seiner Federkraft an die benachbarte Lamelle 20 angedrückt, so daß der zweite, radial innere, Randbereich 32, an der Lamelle 20 zum Anliegen kommt. Das elastische Element 22 liegt nun sowohl in einem Bereich radial außen, dem ersten Randbereich 28, als auch radial innen, dem zweiten Randbereich 32 an der benachbarten Lamelle 20 an. Der mittlere Radiusbereich des elastischen Elements 22, auf welchen der Aktuator 16 wirkt liegt nicht an der benachbarten Lamelle 20 an und kann somit noch gegenüber dem Anlagepunkt des Aktuators federn.

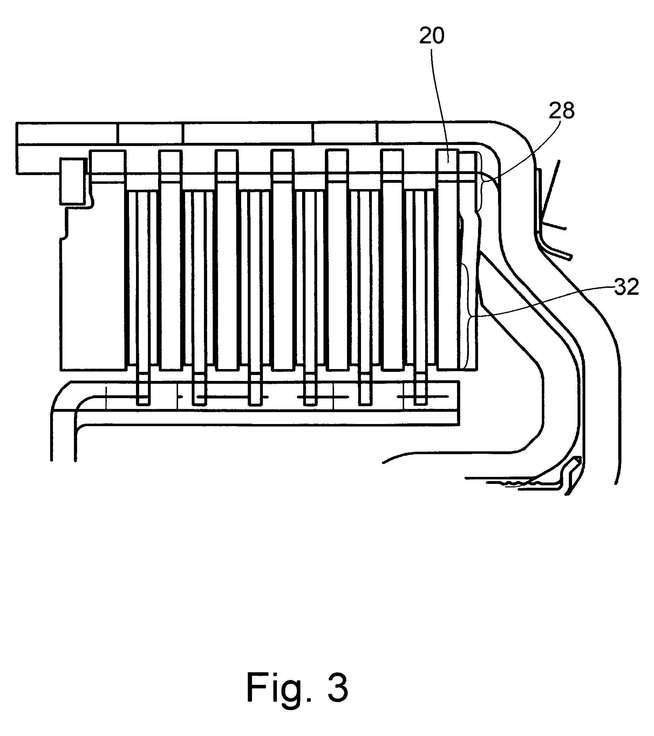

In Fig. 3 ist dieselbe Lamellenkupplung wie in Figur 1 und 2 dargestellt, jedoch bei Nennanpresskraft des Aktuators 16. Der zweite Randbereich 32, welcher an der benachbarten Lamelle 20 anliegt ist nach radial außen stark vergrößert, wohingegen der erste Randbereich 28 im Wesentlichen konstant bleibt. Im Bereich der Stufe 26 liegt das elastische Element 22 noch immer nicht an der benachbarten Lamelle 20 an.

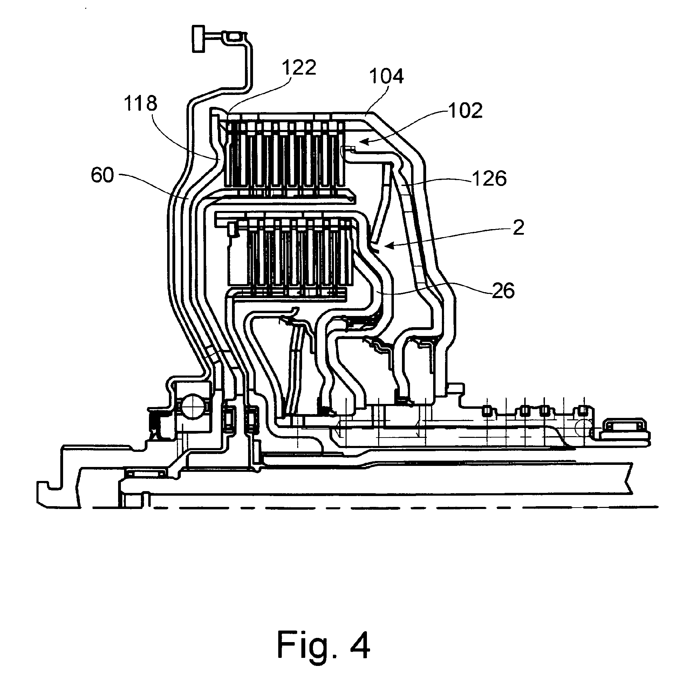

In Figur 4 ist eine nasslaufende Doppelkupplungsanordnung mit zwei Lamellenkupplungen 2, 102 dargestellt. Die radial innere Lamellenkupplung 2 entspricht der Lamellenkupplung der Figuren 1 bis 3. Die Aktuatoren 26, 126 sind als hydraulisch betätigte Kolben ausgebildet. Der Axialanschlag 118 der radial äußeren Lamellenkupplung ist als umlaufende Einbuchtung im Mitnehmer 60 ausgebildet, der mit dem Außenlamellenträger 104 verschweißt ist.

Über den Mitnehmer 60 wird Drehmoment von der Antriebseinheit zu den beiden Lamellenkupplungen 102, 2 übertragen.

Das elastische Element 122 ist an der dem Kolben 126 entgegengesetzten Seite des Lamellenpakets zwischen der Axialabstützung 118 und der letzten Lamelle des Lamellenpakets angeordnet. Die Axialabstützung 118 wirkt hierbei auf den mittleren Radiusbereich des elastischen Elementes, welcher beim Betätigen zunächst nicht zur Anlage an der letzten Lamelle kommt.

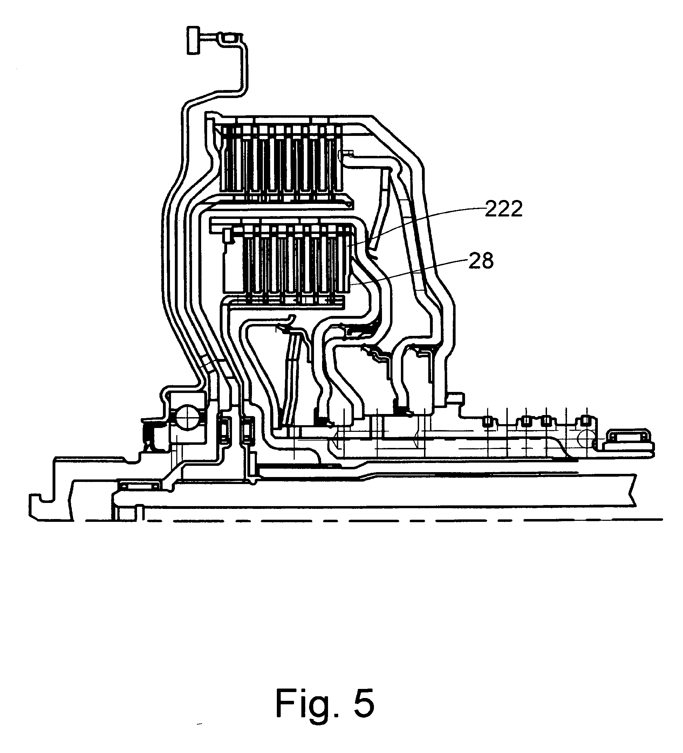

Die Doppelkupplungsanordnung der Figur 5 entspricht bis auf das elastische Element 222 der Doppelkupplungsanordnung der Figur 4. Das elastische Element 222 ist hier ebenfalls als Außenlamelle ausgebildet, jedoch ist der anliegende erste Randbereich 28 radial innen ausgebildet und der zweite Bereich axial versetzte Bereich, welcher von der benachbarten Lamelle axial beabstandet ist, erstreckt sich nach radial außen bis in den Verzahnungsbereich. Die Wirkungsweise des elastischen Elements 222 ist identisch der des des elastischen Elements 22, nur umgekehrt. Beim Betätigen der Lamellenkupplung 2 wird der radial äußere Randbereich zur Anlage an der benachbarten Lamelle gebracht.

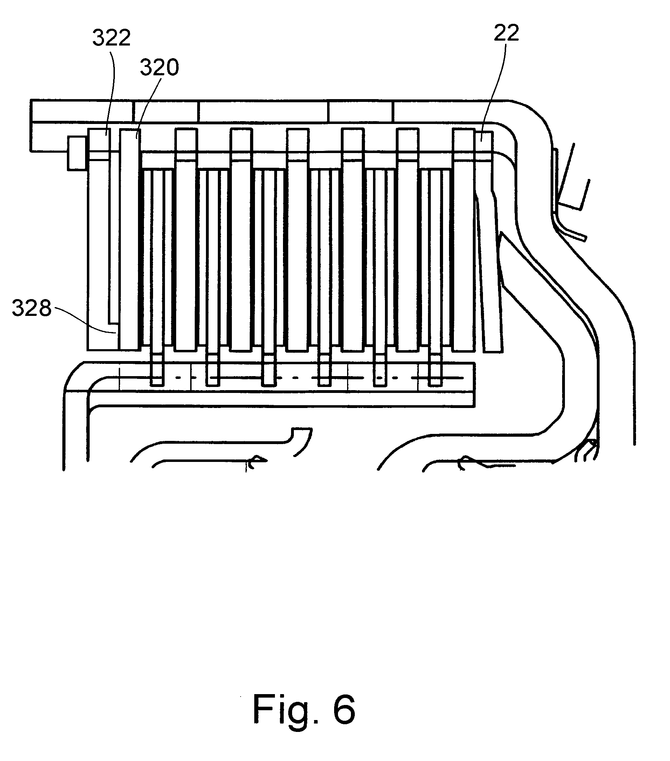

Figur 6 zeigt eine alternative Lamellenkupplung im nichtbetätigtem Zustand, welche neben dem elastischen Element 22 noch ein zweites elastisches Element 322 aufweist. Das elastische Element 322 liegt mit dem ersten, radial inneren, Randbereich 328, an der letzten Außenlamelle 320 an. Im Gegensatz zum elastischen Element 22 welches über die ganze radiale Erstreckung im Wesentlichen eine gleich starke Materialdicke aufweist, ist das elastische Element 322 im ersten Randbereich 328 von der Materialstärke dicker ausgebildet. Im unbetätigten Zustand liegt das elastische Element 22 radial außen an der benachbarten Lamelle an und das elastische Element 322 radial innen an der benachbarten Lamelle 320 an.

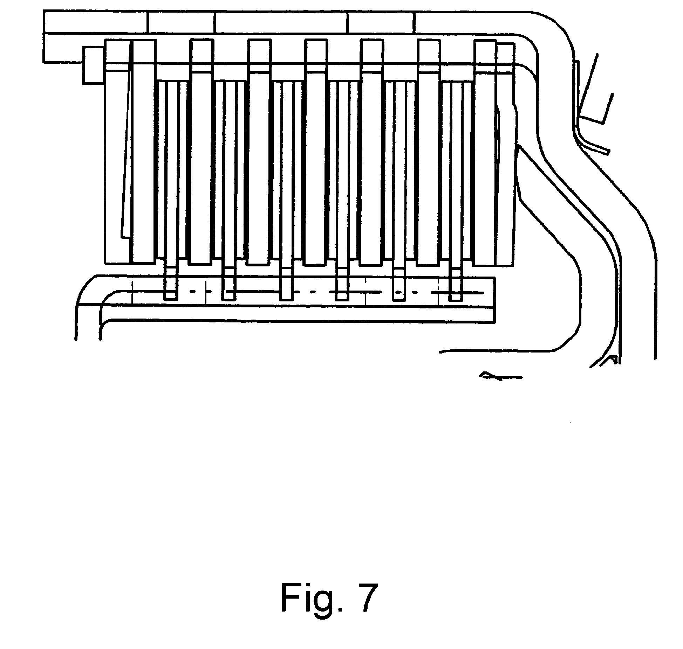

Figur 7 zeigt die Lamellenkupplung der Figur 6 im betätigten Zustand. Die elastischen Elemente 22, 322 sind entgegen ihrer Federkraft nach links verschwenkt. Somit liegen sowohl der erste Randbereich als auch der zweite Randbereich beider elastischer Elemente 22, 322 an den benachbarten Lamellen an. Es versteht sich, dass die Lamellenkupplung der Figuren 6 und 7 auch unter Weglassung des elastischen Elementes 22 und nur mit dem elastischen Element 322 ausgestaltet werden kann.

In Figur 8 ist im Vergleich der qualitative Verlauf des Kraftangriffsradius über den Federweg eines elastischen Elementes nach dem Stand der Technik und nach der Erfindung dargestellt.

In Figur 8 oben ist der Verlauf des Kraftangriffsradius eines elastischen Elements dargestellt, wie es beispielsweise in der US 4 371 066 dargestellt ist, gezeigt.

Unter Kraftangriffsradius ist hierbei der Radiusbereich zu verstehen in welchem eine linienförmige Ersatzkraft auf die dem elastischen Element benachbarte Lamelle wirken würde. Das elastische Element überträgt die Betätigungskraft des Aktuators auf die benachbarte Lamelle und damit auf das gesamte Lamellenpaket. Liegt das elastische Element komplett an der benachbarten Lamelle an, liegt der Kraftangriffsradius im mittleren Radiusbereich des elastischen Elementes. Da der anliegende Bereich des elastischen Elementes aus dem Stand der Technik kontinuierlich von radial außen nach radial innen zunimmt, verläuft der Kraftangriffsradius entsprechend kontinuierlich von radial außen zu einem mittleren Radiusbereich. Der radial mittlere Bereich wird somit erst am Ende des Federweges des elastischen Elementes erreicht. In Figur 8 unten ist der Verlauf des Kraftangriffsradius des elastischen Elements der Figuren 1 bis 3 dargestellt.

Der Verlauf des Kraftangriffsradius des erfindungsgemäßen elastischen Elements weißt keinen langsamen Übergang über den Federweg des elastischen Elementes zu einem mittleren Radiusbereich des elastischen Elements auf, sondern einen gestuften Übergang von einem radial äußeren Bereich zu einem mittleren Bereich. Dies rührt daher, dass mit Anliegen des radial inneren Bereichs des elastischen Elementes an der benachbarten Lamelle der Kraftangriffsradius unmittelbar auf einen mittleren Bereich hinläuft, obwohl das Ende des Federweges noch nicht erreicht ist.

In Figur 8 ist auf der Abszisse der Federweg des elastischen Elementes dargestellt und auf der Ordinate der Kraftangriffsradius. Hierbei entspricht r_{A} dem Außenradius des elastischen Elementes und rl dem Innenradius. Mit _{SE} ist das Ende des Federweges des elastischen Elementes gekennzeichnet.

## Patentansprüche

1. Lamellenkupplung (2) mit von einem um eine Drehachse drehbaren Außenlamellenträger (4) getragenen Außenlamellen (8) und mit von einem um die Drehachse drehbaren Innenlamellenträger (10) getragenen Innenlamellen (14), wobei die Außenlamellen und die Innenlamellen ein ringförmiges Lamellenpaket mit einem Innenradius und einem Außenradius bilden, und mit einem axial beweglichen Aktuator zum Betätigen des Lamellenpaketes, wobei der Aktuator beim Betätigen in einem bezüglich der Drehachse mittlerem Radiusbereich des Lamellenpaketes angreift und wobei das Lamellenpaket ein elastisches Element (22) umfaßt, welches in unbetätigtem Zustand der Lamellenkupplung nur in einem ersten, äußeren oder inneren, Randbereich des Lamellenpaketes an seiner benachbarten Lamelle anliegt,
**dadurch gekennzeichnet,**
**dass** das elastische Element so ausgebildet ist, dass beim Betätigen des Lamellenpaketes, das elastische Element (22) zuerst am dem ersten Randbereich (28) gegenüberliegenden zweiten (32), inneren oder äußeren, Randbereich des Lamellenpaketes, an der benachbarten Lamelle (20) zum Anliegen kommt, und in dem mittlerem Radiusbereich das elastische Element nicht an der benachbarten Lamelle (20) zum Anliegen kommt.

2. Lamellenkupplung nach Anspruch 1,
**dadurch gekennzeichnet, dass** das elastische Element als Außenlamelle ausgebildet ist und mit einem Verzahnungsprofil (6) im Außenlamellenträger (4) getragen wird

3. Lamellenkupplung nach Anspruch 1,
**dadurch gekennzeichnet, dass** das elastische Element (22) einen ersten Bereich (32) und einen davon axial abgestuften zweiten Bereich (28) aufweist, wobei der dach Bereich (28) bei unbelätiger Lamellenkupplung an der benachbarten Lamelle anliegt und das Verhältnis von erstem Bereich zu zweitem Bereich zwischen 1/7 und 3/7 liegt.

4. Lamellenkupplung nach Anspruch 1,
**dadurch gekennzeichnet, dass** die axiale Stufe (26) zwischen 10% und 90% der Materialstärke des ersten Bereichs entspricht.

5. Lamellenkupplung nach Anspruch 2,
**dadurch gekennzeichnet, dass** das elastische Element (22) zwischen dem Aktuator (16) und der ersten benachbarten Außenlamelle (20) angeordnet ist.

6. Lamellenkupplung nach Anspruch 5,
**dadurch gekennzeichnet, dass** der Aktuator mit einer balligen Anlagefläche (24) auf den mittleren Radiusbereich des elastischen Elementes wirkt.

7. Lamellenkupplung nach Anspruch 2,
**dadurch gekennzeichnet, dass** das elastische Element (122) auf der dem Aktuator axial entgegengesetzten Seite des Lamellenpaketes zwischen der letzten Außenlamelle des Lamellenpaketes und einem Axialschlag, welcher das elastische Element axial abstützt, angeordnet ist

8. Lamellenkupplung nach Anspruch 7,
**dadurch gekennzeichnet, dass** der Axialanschlag auf den mittleren Radiusbereich des elastischen Elementes wirkt.

## Claims

1. Multiple disc clutch (2) having outer discs (8) which are supported by an outer disc carrier (4) which can be rotated about a rotational axis, and having inner discs (14) which are supported by an inner disc carrier (10) which can be rotated about the rotational axis, the outer discs and the inner discs forming an annular multiple disc assembly with an inner radius and an outer radius, and having an axially movable actuator for actuating the multiple disc assembly, the actuator acting, upon actuation, in a middle radius region (with regard to the rotational axis) of the multiple disc assembly, and the multiple disc assembly comprising an elastic element (22) which, in the non-actuated state of the multiple disc clutch, bears against its adjacent disc only in a first, outer or inner, edge region of the multiple disc assembly, **characterized in that** the elastic element is configured in such a way that, upon actuation of the multiple disc assembly, the elastic element (22) comes to bear against the adjacent disc (20) first of all at the second (32), inner or outer, edge region of the multiple disc assembly, which second edge region (32) lies opposite the first edge region (28), and the elastic element does not come to bear against the adjacent disc (20) in the middle radius region.

2. Multiple disc clutch according to Claim 1, **characterized in that** the elastic element is configured as an outer disc and is supported by way of a toothing profile (6) in the outer disc carrier (4).

3. Multiple disc clutch according to Claim 1, **characterized in that** the elastic element (22) has a first region (32) and a second region (28) which is stepped axially from the said first region (32), the second region (28) bearing against the adjacent disc when the multiple disc clutch is non-actuated, and the ratio of first region to second region lying between 1/7 and 3/7.

4. Multiple disc clutch according to Claim 1, **characterized in that** the axial step (26) corresponds to between 10% and 90% of the material thickness of the first region.

5. Multiple disc clutch according to Claim 2, **characterized in that** the elastic element (22) is arranged between the actuator (16) and the first adjacent outer disc (20).

6. Multiple disc clutch according to Claim 5, **characterized in that** the actuator acts with a spherical stop face (24) on the middle radius region of the elastic element.

7. Multiple disc clutch according to Claim 2, **characterized in that** the elastic element (122) is arranged on that side of the multiple disc assembly which is axially opposite the actuator, between the last outer disc of the multiple disc assembly and an axial stop which supports the elastic element axially.

8. Multiple disc clutch according to Claim 7, **characterized in that** the axial stop acts on the middle radius region of the elastic element.

## Revendications

1. Embrayage à lamelles (2) comprenant des lamelles extérieures (8) portées par un support de lamelles extérieures (4) pouvant tourner autour d'un axe de rotation et des lamelles intérieures (14) portées par un support de lamelles intérieures (10) pouvant tourner autour d'un axe de rotation, les lamelles extérieures et les lamelles intérieures formant un paquet de lamelles annulaire avec un rayon intérieur et un rayon extérieur, et comprenant un actionneur déplaçable axialement pour l'actionnement du paquet de lamelles, l'actionneur venant en prise lors de l'actionnement dans une région de rayon centrale, par rapport à l'axe de rotation, du paquet de lamelles, et le paquet de lamelles comprenant un élément élastique (22) qui, dans l'état non actionné de l'embrayage à lamelles ne s'applique que dans une première région de bord extérieure ou intérieure du paquet de lamelles contre sa lamelle adjacente,
**caractérisé en ce que**
l'élément élastique est réalisé de telle sorte que, lors de l'actionnement du paquet de lamelles, l'élément élastique (22) vienne en appui contre la lamelle adjacente (20) d'abord sur la deuxième région de bord (32), intérieure ou extérieure, du paquet de lamelles, opposée à la première région de bord (28), et que l'élément élastique ne vienne pas en appui contre la lamelle adjacente (20) dans la région de rayon centrale.

2. Embrayage à lamelles selon la revendication 1, **caractérisé en ce que** l'élément élastique est réalisé sous forme de lamelle extérieure et est porté avec un profilé de denture (6) dans le support de lamelles extérieures (4).

3. Embrayage à lamelles selon la revendication 1, **caractérisé en ce que** l'élément élastique (22) présente une première région (32) et une deuxième région (28) étagée axialement par rapport à celle-ci, la deuxième région (28) s'appliquant contre la lamelle adjacente lorsque l'embrayage à lamelles n'est pas actionné et le rapport de la première région à la deuxième région étant compris entre 1/7 et 3/7.

4. Embrayage à lamelles selon la revendication 1, **caractérisé en ce que** l'étage axial (26) correspond à entre 10% et 90% de l'épaisseur de matériau de la première région.

5. Embrayage à lamelles selon la revendication 2, **caractérisé en ce que** l'élément élastique (22) est disposé entre l'actionneur (16) et la première lamelle extérieure (20) adjacente.

6. Embrayage à lamelles selon la revendication 5, **caractérisé en ce que** l'actionneur agit avec une face d'appui bombée (24) sur la région de rayon centrale de l'élément élastique.

7. Embrayage à lamelles selon la revendication 2, **caractérisé en ce que** l'élément élastique (22) est disposé du côté du paquet de lamelles opposé axialement à l'actionneur entre la dernière lamelle extérieure du paquet de lamelles et une butée axiale, qui supporte axialement l'élément élastique.

8. Embrayage à lamelles selon la revendication 7, **caractérisé en ce que** la butée axiale agit sur la région de rayon centrale de l'élément élastique.
